# EUROPEAN PATENT APPLICATION

(11) **EP 1 548 407 A1**
(43) Date of publication of application: **29.06.2005**
(21) Application number: 04030624.3
(22) Date of filing: 23.12.2004
(51) Int. Cl.: G01C 21/36, G08G 1/0968, G08G 1/01

(54) **System and method of displaying predicted traffic information**

(30) Priority: 26.12.2003 JP 2003434703; 29.09.2004 JP 2004284930
(71) Applicant: AISIN AW CO., LTD., Anjo-shi, Aichi-ken 444-1192 (JP)
(72) Inventor: Tomita, Hiroshi, Okazaki-shi Aichi 444-8564 (JP); Yoshikawa, Kazutaka, Okazaki-shi Aichi 444-8564 (JP); Nagase, Kenji, Okazaki-shi Aichi 444-8564 (JP); Minami, Toshiaki, Okazaki-shi Aichi 444-8564 (JP); Ishikawa, Hiroki, Okazaki-shi Aichi 444-8564 (JP)
(74) Representative: Vollnhals, Aurel

(57) **Abstract**

Systems and methods of displaying predicted traffic congestion information may predict traffic congestion information at each of a plurality of times through statistical processing of traffic information. If the predicted traffic congestion information is not conspicuously changed at a setting time or within a predetermined time period of the setting time, the predicted traffic congestion information may be displayed at display times defined by regular time intervals. If the predicted traffic congestion information is conspicuously changed at a setting time or within a predetermined time period of the setting time, the predicted traffic congestion information may be displayed at display times defined by the times at which the predicted traffic congestion information is conspicuously changed.

## Description

### INCORPORATION BY REFERENCE

The disclosure of Japanese Patent Application Nos. 2003-434703 filed on December 26, 2003 and 2003-284930 filed on September 29, 2004 including the specifications, drawings, and abstracts are incorporated herein by reference in their entirety.

### BACKGROUND

### 1. Related Technical Fields

Related technical fields include systems and methods of displaying predicted traffic congestion information.

### 2. Description of Related Art

A conventional road map display device is provided with a road map memory in which statistical traffic congestion information data corresponding to days of the week and time periods is stored. When a day of the week or time period is specified, traffic congestion information for the time period of the specified day are displayed on a road map by means of a superimposed display. (Refer to, for example, Japanese Unexamined Patent Application Publication No. 9-113290).

### SUMMARY

In, for example, the above-described conventional road map display device, only traffic congestion information for the one specified time period of the specified day is displayed so that a user can not know about the transition of traffic congestion information for the specified time period, i.e., whether it is getting worse or better. Thus, a user may not efficiently plan a trip.

Accordingly, various implementations provide a method of displaying predicted traffic congestion information including predicting traffic congestion information at each of a plurality of times through statistical processing of traffic information. If the predicted traffic congestion information is conspicuously changed within a predetermined time period of a setting time, the predicted traffic congestion information may be display at display times defined by the times at which the predicted traffic congestion information is conspicuously changed.

Various implementations provide a navigation system including a controller that may predict traffic congestion information at each of a plurality of times through statistical processing of traffic information. The controller may display the predicted traffic congestion information at display times by the times at which the predicted traffic congestion information is conspicuously changed if the predicted traffic congestion information is conspicuously changed within a predetermined time period of a setting time.

### BRIEF DESCRIPTION OF THE DRAWINGS

Examples will now be described with reference to the accompanying drawings, wherein:

Fig. 1 is a block diagram showing an exemplary navigation system;

Fig. 2 is a flowchart showing an exemplary navigation method;

Fig. 3 is a flowchart showing another exemplary navigation method;

Fig. 4(a)-(d) are drawings showing an example of reference data in which predicted traffic congestion information may be displayed;

Figs. 5(a)-(d) are drawings showing an example of reference data in which predicted traffic congestion information may be displayed;

Figs. 6(a)-(d) are drawings showing an example of reference data in which predicted traffic congestion information may be displayed; and

Figs. 7(a)-(d) are drawings showing an example of reference data in which predicted traffic congestion information may be displayed.

### DETAILED DESCRIPTION OF EMBODIMENTS

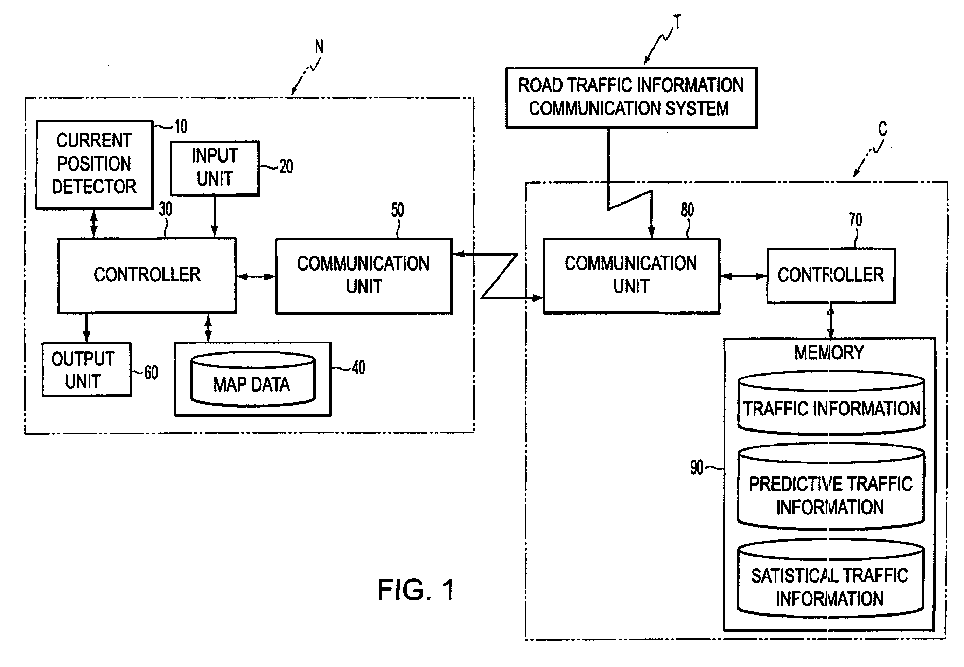

Fig. 1 is a block diagram showing an exemplary navigation system which may be applied to a vehicle. This navigation system may be physically, conceptually, or functionally divided into, for example, a navigation apparatus N and an information communication system C, for example, installed in an information center. The navigation apparatus N may be provided with a current position detector 10, such as, for example, a GPS receiver that may receive radio waves sent from an artificial satellite of a satellite navigation system (also known as GPS) and may detect a current position of the vehicle as well as a present day and time.

In addition, the navigation apparatus N may be provided with an input unit 20, such as, for example, a portable remote controller, the operation of which may send information to a controller 30 (described later). For example, a touch panel, keyboard, mouse, and/or a voice recognition device may also be employed as the input unit 20.

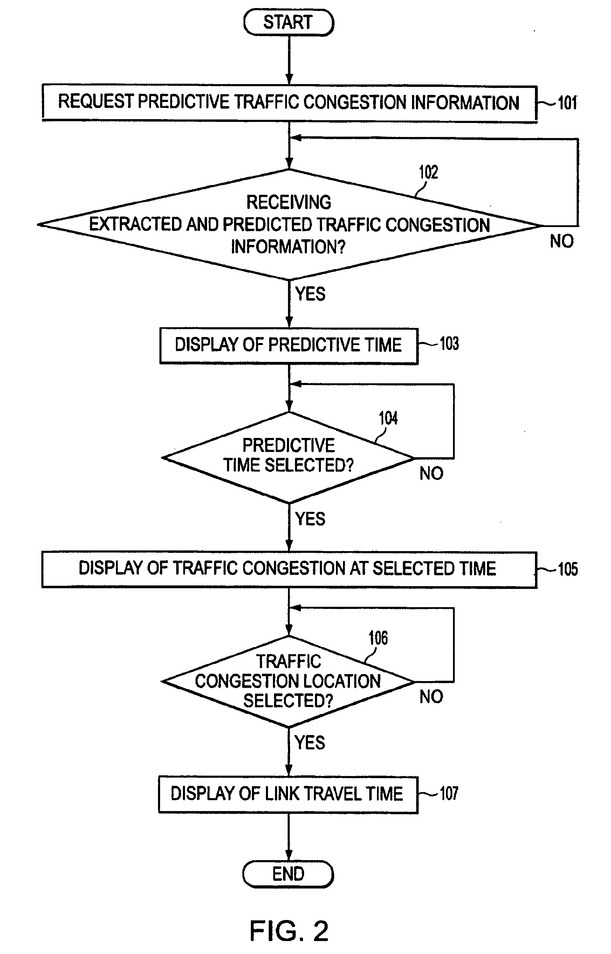

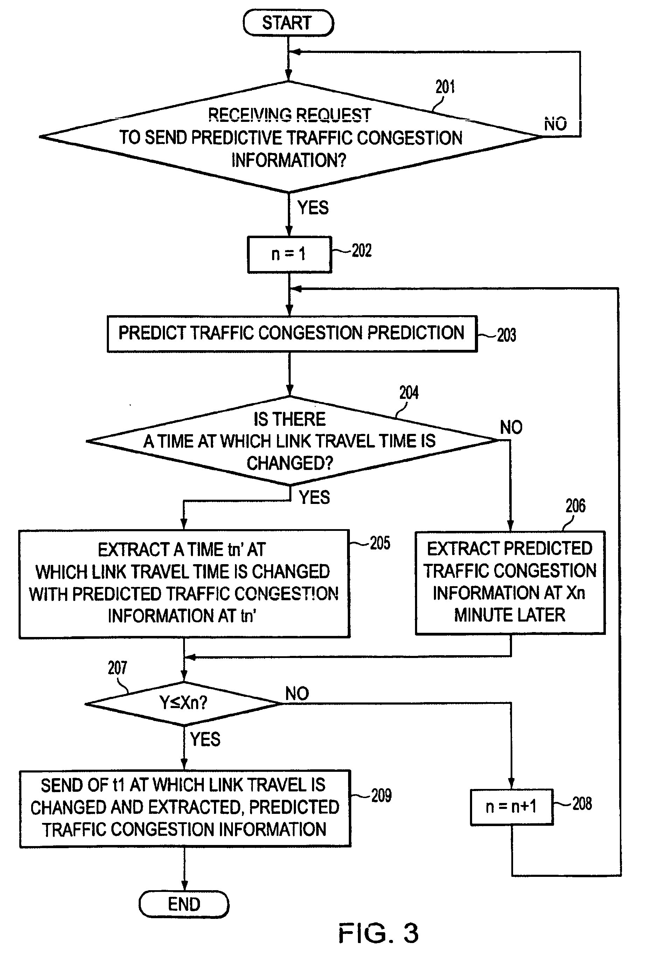

Furthermore, the navigation apparatus N may be provided with, for example, a controller 30, a memory 40, a communication unit 50, and/or an output unit 60. The controller 30 may execute, for example, the exemplary navigation methods shown in Figs. 2 and/or 3. During execution of the program, for example, control of display of the output unit 60 and control required for route guidance of the vehicle may be performed by controller 30 based upon, for example, information from the current position detection unit 10, the input unit 20, the memory 40, and/or the communication unit 50.

A receiver may be built into the controller 30 and/or may be externally attached to the controller 30. The controller 30 may operate using electricity supplied from, for example, a battery via an ignition switch of the vehicle. Accordingly, the controller 30 may initiate execution of a navigation method, such as, for example, the exemplary method shown in Figs. 2 and/or 3. Note that the navigation method may be written in advance as instructions on, for example, a ROM of the controller 30 and may be readable by the controller 30.

The memory 40 may include, for example, a hard disk. Map data may be stored in the memory 40, for example, in a database or other data structure.

The communication unit 50 may receive data sent from, for example, a communication unit 80 of the information communication system C. The received data may be output to the controller 30. In addition, the communication unit 50 may send data output from, for example, the controller 30 to, for example, the information communication system C.

The output unit 60 may include, for example, a display device. Under control of the controller 30, the output unit 60 may display, for example, information required for navigation on a display panel.

The information communication system C may communicate with the navigation apparatus N, and may be provided with, for example, a controller 70, the communication unit 80, and/or a memory 90. The controller 70 may execute, for example, the exemplary navigation methods shown in Figs. 2 and/or 3. The controller may control, for example, storage or manipulation of data from, for example, the communication unit 80, storing data in the memory 90, and outputting data from the memory 90 to the communication unit 80.

The communication unit 80 may receive data from, for example, the communication unit 50 of the navigation apparatus N and/or from, for example, a road traffic information communication system T (hereinafter also referred to as VICS (registered trademark) T), which it may output to the controller 70. The communication unit 80 may also send data from the controller 70 to the navigation apparatus N. Note that the road traffic information communication system T may be designed so as to send information including traffic conditions such as a link travel time, vehicle speed, traffic congestion degree, roads closed to traffic and traffic regulations as traffic information data.

As used herein, the term link refers to, for example, a road or portion of a road. For example, according to one type of road data, each road may consist of a plurality of componential units called links. Each link may be separated and defined by, for example, an intersection, an intersection having more than three roads, a curve, and/or a point at which the road type changes. A link travel time is the amount of time necessary to travel a particular link.

The memory 90 may consist of, for example, a hard disk. Traffic information, statistical traffic information, and/or predictive traffic information may be stored in the memory 90, for example, in a database or other data structure that may be readable by the controller 70. The traffic information may include a link travel time, vehicle speed, traffic congestion degree, and/or roads closed due to traffic and traffic regulations. Such information may be sent from, for example, the road traffic information communication system T.

The statistical traffic information may include past traffic information that may be sent from, for example, the road traffic information communication system T and may be statistically processed. The predictive traffic information may be future traffic information data that may be calculated from, for example, traffic information and/or statistical traffic information. Traffic congestion degrees may include degrees of traffic congestion determined by, for example, a vehicle speed and may be rated according to, for example, a scale of four (4) levels. For example, in order of traffic congestion degree, "Congested", "Crowded", "Not congested", and "Uncertain" may be used as levels, for example, as shown in table 1. Note that, in general, traffic congestion degrees may be rated according to any scale including two or more degrees.

**[Table 1]**

| | Congested | Crowded | Not Congested |
|---|---|---|---|
| General road | V≤10km/h | 10km/h<V≤20km/h | 20km/h<V |
| Urban highway | V≤20km/h | 20km/h<V≤40km/h | 40km/h<V |
| Intercity highway | V≤40km/h | 40km/h<V≤60km/h | 60km/h<V |

As described above, the controller 30 may execute, for example, the exemplary navigation method shown in Fig. 2, and the controller 70 may execute, for example, the exemplary navigation method shown in Fig. 3. Although, either or both of the exemplary methods shown in Figs. 2 and 3 may be executed by either of the controllers 30, 70 individually.

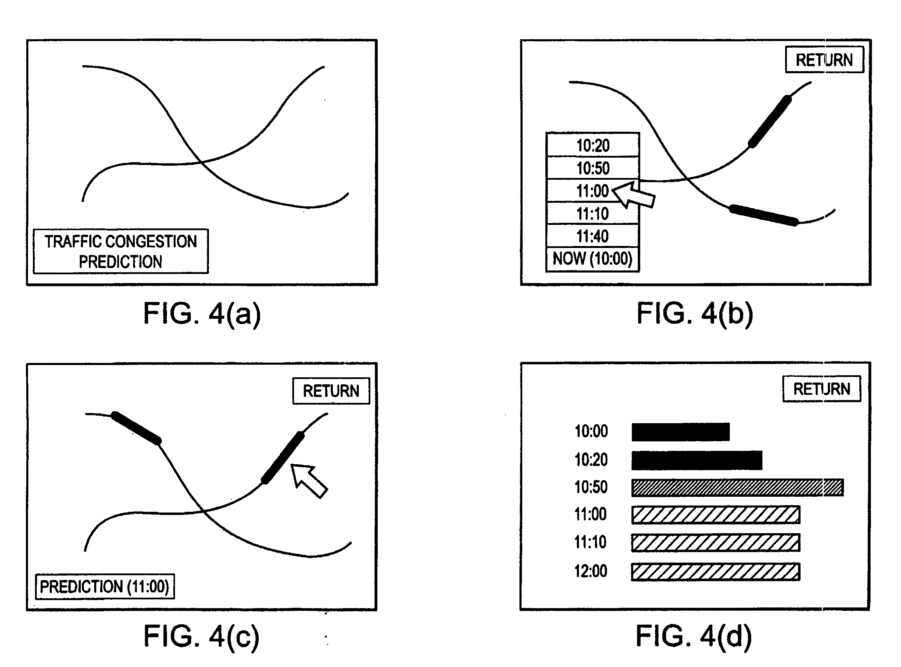

As shown in Fig. 2. In step 101, predictive traffic information (e.g., as shown in Fig. 4(a), Fig. 5(a), Fig. 6(a), and Fig. 7(a)) may be requested. For example, the controller 30 may request predicted traffic congestion information base on, for example and input from the input unit 20. The request may be sent to, for example, controller 70 of the information to the information communication system C via, for example, the communication units 50, 80. The controller 30, for example, may output display area information including, for example, road information on a map displayed on an output unit 60 of the navigation apparatus N, map area information, and/or current position information to the controller 70 of the information to the information communication system C via, for example, the communication units 50, 80. The display area information may also include, for example, a destination, points passed, and/or a route to a destination.

Then, in step 201 of Fig. 3, a determination is made whether a request (e.g., step 101) has been received. For example, controller 70 may receive a request to send predicted traffic congestion information along with the sent display area information and via communication unit 80. If a request has been received, operation continues to step 202. In step 202n is set to 1. For example, the controller 70 may set, for example, enumeration data as n=1. Then, in step 203, traffic congestion is predicted. For example, the controller 70 may predict traffic information based on predictive traffic information, stored in, for example, memory 90. Specifically, the controller 70 may use the predictive traffic information calculated from, for example, the statistical traffic information data in memory 90, and may search link travel times in a target area received in, for example, the display area information. This search may be initiated from, for example, a current time and may be executed for a maximum transition duration of X minutes at minimum predictive time period Ta-minute intervals. For example, the minimum prediction period Ta may be 5 minutes and the maximum transition duration X may be longer, for example, 30 minutes. Thus, for example, the traffic congestion prediction processing may be performed over a period of 30 minutes at 5-minute intervals. Operation continues to step 204.

In step 204, it is determined whether there is a time at which a link travel time is conspicuously changed compared to, for example, a previous travel time for that link traffic information. This determination may be made, for example, by controller 70. If there is such time at which a link travel time is conspicuously changed, operation continues to step 205. If there is not such time at which a link travel time is conspicuously changed, operation continues to sep 206.

In step 205, a time tn' at which the link travel time is changed and corresponding predicted traffic congestion information at the time tn' is extracted. A link travel time may be considered conspicuously changed when, for example, a difference between the link travel time being considered and a precious link travel time (for example, at a time Xn-1) is more than a predetermined value, for example, within a minimum prediction time period Ta. For instance, link travel times may be considered changed if the link travel times are doubled compared to one or more previous values. In addition, predicted traffic congestion information may include, for example, locations of traffic congestion, link travel times, and traffic congestion degrees, and/or the like.

In step 206, predicted traffic congestion information in Xn minutes is extracted. Note that, for example, in the first traffic congestion prediction processing, Xn is equal to X1 since an enumeration data is n=1. Therefore, the traffic congestion may be predicted starting from a current time to X1 minutes later, (e.g. 30 minutes later). Operation continues to step 207.

In step 207 is determined whether Y≤Xn. For example, according to extracted traffic congestion predictive information in step 205 and 206, if the current duration of predicted traffic information Xn is shorter than a maximum predictive time Y, operation continues to step 208 where the enumeration data is updated to n=n+1 in step 208. Then operation returns to step 203. Accordingly, for example, the second traffic congestion prediction processing from X1 to X2, for example, from 30 minutes to 60 minutes are executed and the determination processing in step 207 is repeated.

The maximum predictive time Y is a setting time period, for example, 120 minutes. When the minimum predictive time Ta is 5 minutes and the maximum transition duration X is 30 minutes, the traffic congestion prediction processing is performed over a period of 30 minutes at 5-minute intervals from a current time. More specifically, the traffic congestion prediction processing is executed from the current time to 120 minutes later.

If, in step 207, the current duration of predicted traffic information Xn is longer than maximum predictive time Y, operation continues to sep 209. In step 209, a time tn' at which a link travel time is conspicuously changed, predicted traffic congestion information at time tn', or predicted traffic congestion information which is Xn minutes later than the predicted traffic congestion is output. The information may be output, for example, by controller 70 to controller 30 of the navigation apparatus N via communication units 50, 80.

Returning to Fig. 2, in step 102 a determination is made whether predicted traffic information (e.g., a time tn' at which a link travel time is conspicuously changed, predicted traffic congestion information at time tn', or predicted traffic congestion information which is Xn minutes later than the predicted traffic congestion) is received. This determination may be made by, for example, the controller 30. If it is received, operation continues to step 103.

In step 103, the time tn' at which the received link travel time is conspicuously changed or a time which is passed over the maximum transition duration is displayed, for example, as shown in Figs. 4(b), 5(b), 6(b), and 7(b). This information may be displayed, for example, by controller 30 on output unit 60.

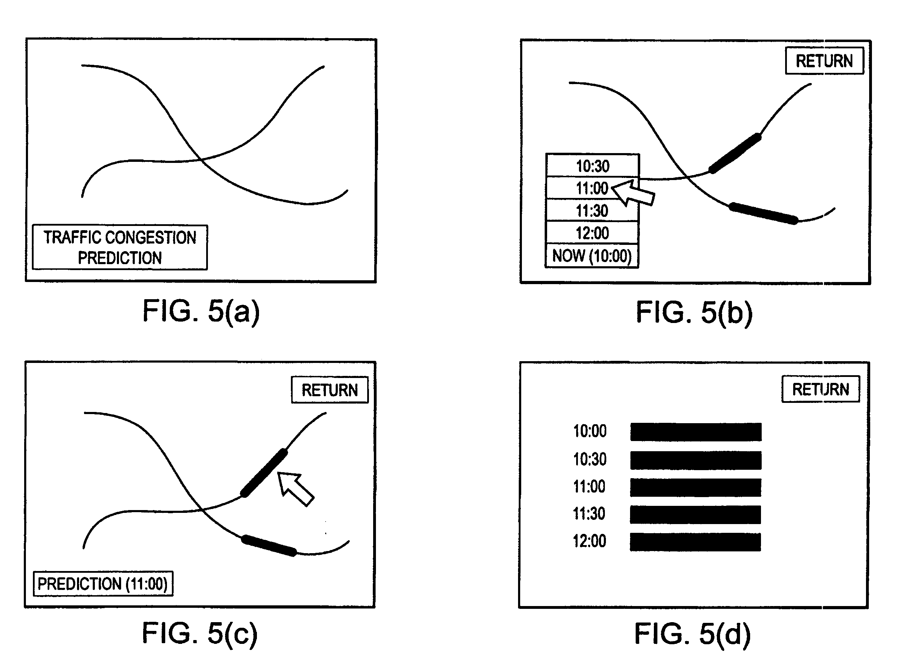

In Figs. 4(b) and 5(b), a time at which is a setting time period later from a current time, or a time which is passed over the maximum transition duration is displayed, for example, on a display panel. The time at which the link travel time is conspicuously changed or the time which is passed over the maximum transition duration may also be displayed, for example, on the display panel. At this time, the controller 30 may display each predictive time at which link travel times are conspicuously changed (for example, as found in step 205) as shown in Fig. 4(b). As shown in Fig. 5(b), the controller 30 may display each predictive time of predicted traffic congestion information at maximum x-minute (e.g., 30 mins.) transition duration intervals (for example, as found in step 206) when link travel times in the display area have no change.

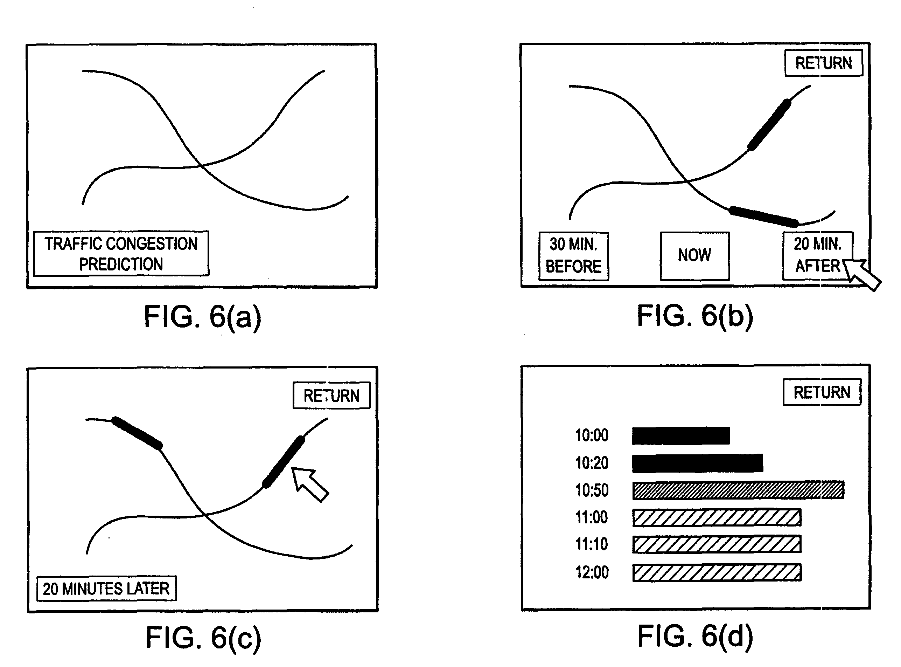

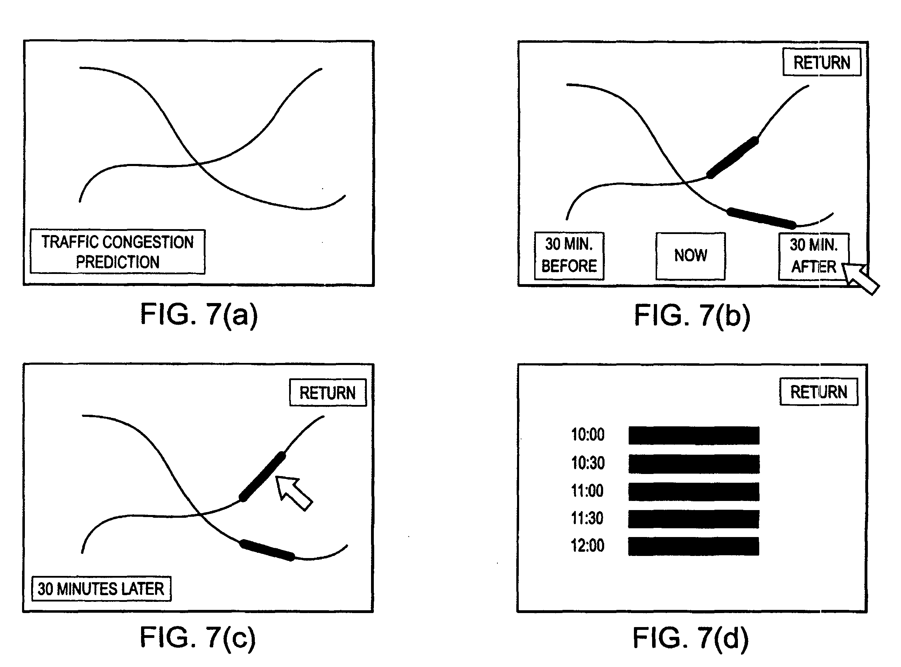

Alternatively, as shown in Figs. 6(b) and 7(b), a current time and preceding/following time of the current time may be displayed, for example, on a display panel. Also in the display panel, time tn' at which a link travel time is conspicuously changed may be displayed as preceding/following times of the current time. For example, as shown in Fig. 6(b) "30 minutes before" or "20 minutes after" the current time are times at which a link travel time is conspicuously changed. Also as shown in Fig. 7(b) the current time and the preceding/following time period at maximum x-minute transition duration intervals (30-minute intervals in Fig. 7(b)) may be shown when link travel times in the display area have no change.

Returning to Fig. 2, in step 104 it is determined whether a desired time or a preceding/following time of the desired time is selected. A desired time or a preceding/following time, for example displayed on the display as shown in Figs. 4(b), 5(b), 6(b), and 7(b), may be selected by a user, for example, through operation of the input unit 20. If a desired time or a preceding/following time of the desired time is selected, the extracted and predicted traffic congestion information at the desired time are displayed in step 105. Such may be displayed, for example, on the output unit 60, as shown in Figs. 4(c), 5(c), 6(c), and 7(c) (for example, thick line segments may indicate traffic congestion locations). Operation continues to step 106.

In step 106, it is determined whether a congestion location is selected. A congestion location may be selected, for example, by the user through operation of the input unit 20. If a congestion location is selected, link travel time information for each time regarding the selected traffic congestion location is output in step 107. For example, the information may be output on the output unit 60, as shown in Figs. 4(d), 5(d), 6(d), and 7(d), wherein the link travel time information for each time may be displayed, for example, as a histogram. As shown in Figs. 4(d) and 6(d), each extracted link travel times where there is a link travel time which is conspicuously changed may be displayed. As shown in Figs. 5(d) and 7(d), each time link travel times at maximum x-minute transition duration intervals may be displayed when link travel times in the display area have no change. Then, operation of the method ends.

According to the above described examples, it is possible for a user to obtain predicted traffic congestion information at each time corresponding to the transition of link travel times. That is, if a link travel time is conspicuously changed, it is possible to obtain predicted traffic congestion information for shorter time periods and if the transition of link travel times is not conspicuous, predicted traffic congestion information at no-changed time periods can be reduced. Therefore, predicted traffic congestion information corresponding to the transition of link travel times can be obtained.

Further, according to the above described examples, after it is determined whether there is a time at which a link travel time is conspicuously changed, the time tn' is extracted with predicted traffic congestion information at the time tn'. However, it may only be determined whether there is a time at which at least one of link travel times and traffic congestion degrees is conspicuously changed and the time tn' may be extracted with predicted traffic congestion information at the time tn'.

Further, according to the above described examples, traffic congestion prediction processing starts from a current time since the current time may be a setting time. However, the user may specify a setting time, for example, 10:00 a.m. of a next day, execute traffic congestion prediction processing at the specified time, and then may display the predicted traffic congestion information at the time.

Furthermore, according to the above described examples, the information communication system C receives VICS data from the road traffic information communication system T, executes various data processing, and sends the data to the navigation apparatus N. However, the navigation apparatus N may directly receive VICS data from the road traffic information communication system T and then execute the processing.

Note that a personal computer, cellular phone, PDA, or any other device containing a capable controller 30 may be used in place of the navigation apparatus N.

While various features have been described in conjunction with the examples outlined above, various alternatives, modifications, variations and/or improvements of those features may be possible. Accordingly, the various examples, as set forth above, are intended to be illustrative. Various changes may be made without departing from the broad spirit and scope of underlining principles.

## Claims

1. A method of displaying predicted traffic congestion information, comprising:
predicting traffic congestion information at each of a plurality of times through statistical processing of traffic information; and
displaying, if the predicted traffic congestion information is conspicuously changed within a predetermined time period of a setting time, the predicted traffic congestion information at display times defined by the times at which the predicted traffic congestion information is conspicuously changed.

2. The method of claim 1, further comprising:
displaying, if the predicted traffic congestion information is not conspicuously changed within a predetermined time period of the setting time, the predicted traffic congestion information at display times defined by regular time intervals.

3. The method of claim 1, further comprising:
selecting one of the display times; and
displaying predicted traffic congestion information at the selected display time.

4. The method of claim 1, wherein the setting time is a current time or a time specified by a user.

5. The method of claim 1, wherein:
the predicted traffic congestion information comprises a link travel time or a traffic congestion degree.

6. The method of claim 1, wherein:
the predicted traffic congestion information is conspicuously changed if the link travel time or traffic congestion degree is changed by more than a predetermined value.

7. The method of claim 1, further comprising:
displaying the predicted traffic congestion information as preceding or following times of a current time.

8. A storage medium storing a set of program instructions executable on a data processing device and usable for performing the method recited in claim 1.

9. A navigation system, comprising:
a controller that:
predicts traffic congestion information at each of a plurality of times through statistical processing of traffic information, and
displays the predicted traffic congestion information at display times defined by the times at which the predicted traffic congestion information is conspicuously changed if the predicted traffic congestion information is conspicuously changed within a predetermined time period of a setting time.

10. The system of claim 9, wherein the controller:
displays the predicted traffic congestion information at display times defined by regular time intervals if the predicted traffic congestion information is not conspicuously changed within a predetermined time period of the setting time.

11. The system of claim 9, wherein the controller:
selects one of the display times; and
displays predicted traffic congestion information at the selected display time.

12. The system of claim 9, wherein the setting time is a current time or a time specified by a user.

13. The system of claim 9, wherein:
the predicted traffic congestion information comprises a link travel time or a traffic congestion degree.

14. The system of claim 9, wherein:
the predicted traffic congestion information is conspicuously changed if the link travel time or traffic congestion degree is changed by more than a predetermined value.

15. The system of claim 9, wherein the controller:
displays the predicted traffic congestion information as preceding or following times of a current time.

16. A navigation information center comprising the system of claim 9.

17. A navigation apparatus comprising the system of claim 9.

18. The navigation apparatus of claim 17, wherein the navigation apparatus comprises at least one of an apparatus installed in a vehicle, a personal computer, a cellular phone, and a PDA.

19. A navigation system, comprising:
means for predicting traffic congestion information at each of a plurality of times through statistical processing of traffic information; and
means for displaying the predicted traffic congestion information at display times defined by the times at which the predicted traffic congestion information is conspicuously changed if the predicted traffic congestion information is conspicuously changed within a predetermined time period of a setting time.

20. The system of claim 19, further comprising:
means for selecting one of the display times; and
means for displaying predicted traffic congestion information at the selected display time.
